# EUROPEAN PATENT APPLICATION

(11) **EP 1 919 203 A1**
(43) Date of publication of application: **07.05.2008**
(21) Application number: 06425732.2
(22) Date of filing: 24.10.2006
(51) Int. Cl.: H04N 5/445, H04N 5/44

(54) **System for selecting channels or programs to be reproduced on reproducing apparatus, related method and device**

(71) Applicant: Leldis S.r.l., 20090 Trezzano S/N (MI) (IT)
(72) Inventor: Lapeschi, Massimo Leldis S.r.l., 20090 Terrenzano sul Naviglio(MI) (IT)
(74) Representative: Robba, Pierpaolo

(57) **Abstract**

The present invention relates to a system for selecting channels or programs that comprises centralised distribution means (11) arranged to distribute channels or programs to at least one reproduction apparatus (19), selection means (14) arranged to select and to transmit to the centralised distribution means (11) selection commands for selecting channels or programs to be reproduced on the reproduction apparatus (19). The system (10) further comprises conversion means (15, 51, 81) interposed between the selection means (14) and the centralised distribution means (11) for converting and transmitting the selection commands to the centralised distribution means (11) in at least two alternative modes selectively actuatable. The invention also relates to the devices arranged for converting and transmitting the selection commands and to the method of conversion and transmission.

## Description

### Technical Field

The present invention relates to a system for selecting channels or programs to be reproduced on reproducing apparatus, in particular television sets (TV sets). The present invention relates also to a method for selecting channels or programs and to a device arranged to allow channels or programs selection.
In particular, the present invention relates to systems comprising centralised means arranged to receive or to manage channels or programs, a plurality of TV sets and at least one device close to the TV sets and arranged to select, through remote centralised means, the channel or the program to be reproduced by the TV sets.

### Background Art

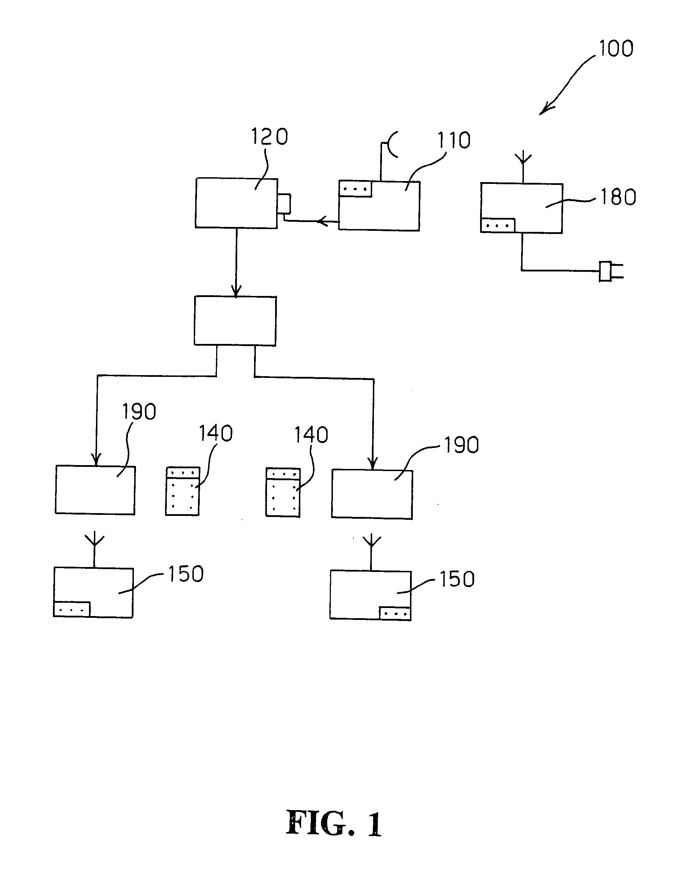

Systems 100 (Fig. 1) are known in the art for remotely selecting channels, for instance television channels, or programs stored in a magnetic or magnetic/optical medium. Known systems comprise, for instance, a satellite apparatus 110, for channels reception, arranged to be controlled by remote, by means of a controller 140, for selecting channels to be reproduced by a plurality of TV sets 190.
Known system comprises, for instance, a first box 150, configured for receiving the channel selection from the controller 140, by means of signals of IR type (Infra red), and for transmitting the selection, by means of radio frequency waves (RF communication), to a second box 180, located close to the satellite apparatus 110 and configured for receiving the selection, by means of the RF communication, and for transmitting the received selection to the satellite apparatus 110, by means of signals of IR type.
In this way, the selection of a channel carried out close to the TV set 190 is transmitted to the satellite apparatus 110, for instance a centralised one, that, being connected to a modulator device 120, in turn connected to the TV sets through cables and apparatuses distributing TV signals, is arranged to transmit the TV signals regarding the selected channel to the TV sets.

The known system in the described configuration is greatly rigid.
As a matter of fact, the known system does not adapt to environmental situations that are either unfavourable (walls, metallic shields, etc.) or that have become unfavourable with time (new neighbours with particularly noisy apparatuses as regards electromagnetic emissions); in such unfavourable conditions RF communications from the first box 150 to the second box 180 are difficult or interfered and, normally, it is not at all possible to fix the communication difficulties and it is necessary, for instance, to modify the system configuration or, in extreme cases, to drop the possibility of selecting channels by remote.
The above highlighted problem affects both users and installers of satellite apparatuses who, in case of RF communication difficult conditions, have to make repeated attempts, by modifying, for instance, the location of the satellite apparatus for overcoming the problem.

In summary, the Applicant has found that known systems are not apt to guarantee in all situation the possibility to remotely select channels to be reproduced on TV sets connected to centralised means for channels or programs reception or management.

### Disclosure of the Invention

Object of the present invention is a system that solves in a simple way the problems outlined above of the background art.

The object is achieved by the system for selecting channels or programs to be reproduced on reproducing apparatuses as claimed.

The present invention also relates to a method for selecting channels or programs, to an extension device in transmission and to a corresponding extension device in reception as claimed; the method and the devices being usable in the system according to the invention, as claimed. Claims are an integral part of the teaching of the present invention.

According to a feature of a preferred embodiment the system comprises conversion means arranged to convert channels or programs selection commands in at least two alternative modes selectively actuatable.

According to a further feature of the present invention, the system comprises a device arranged to transmit the selection commands in two alternative modes.

According to still another feature of the present invention the system comprises a device arranged to receive and to manage, alternatively, one of the two modes for controlling the selection of channels or programs to a centralised apparatus for distributing channels or programs.

### Brief Description of Drawings

These and further features and advantages of the present invention will appear more clearly from the following detailed description of preferred embodiments, provided by way of non-limiting examples with reference to the attached drawings, in which components designated by same or similar reference numerals indicate components having same or similar functionality and construction and wherein:
Fig. 1 shows a system for selecting channels or programs according to the known art;
Fig. 2 shows a system for selecting channels or programs according to the invention;
Fig. 3 shows a block diagram of a device of Fig. 2; and
Fig. 4 shows a block diagram of further devices of Fig. 2.

### Best mode for Carrying Out the Invention

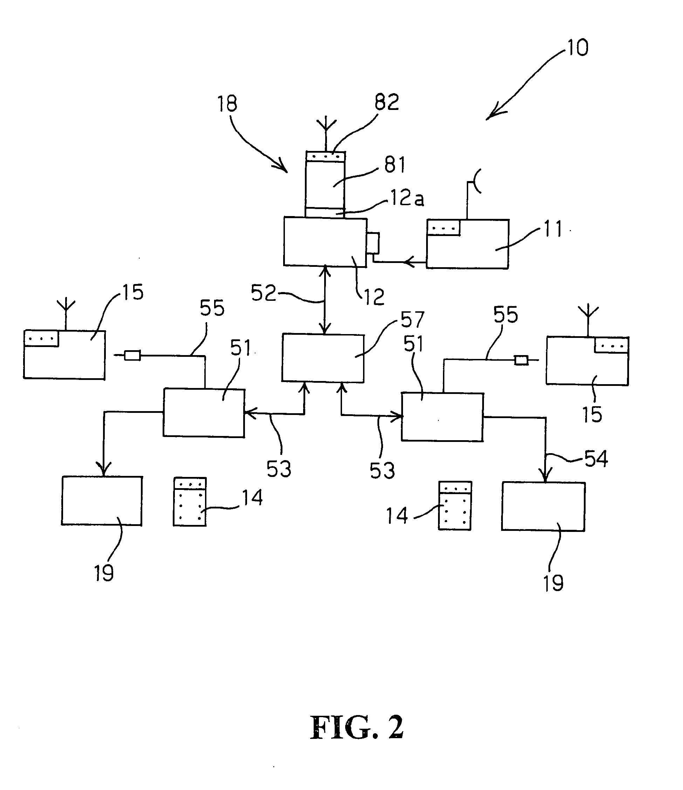

With reference to Fig. 2 a system for selecting channels or programs (system) 10, according to a preferred embodiment of the present invention, comprises a distribution set 11, of known type, for instance an apparatus for reception and distribution of satellite channels arranged to receive and distribute TV signals corresponding to satellite channels or programs, at least one selection device (controller) 14, of known type, arranged to select channels or programs (channels), for instance by means of infrared signals (IR), and, preferably, a plurality of channels reproduction apparatuses 19, of known type, arranged to reproduce sounds and/or images, for instance TV sets.
In the preferred embodiment, the system 10 further comprises a modulator device 12 connected in a known way, for instance by means of a SCART cable and socket, to the distribution set 11 and a shunt device (splitter) 57, of known type, connected in a known way through a cable 52, for instance a coaxial cable of TV type, to the modulator device (modulator) 12 and arranged to shunt TV signals coming from the distribution set 11 to one or more reproduction apparatus(es) (TV set(s)) 19.
The system 10, in the preferred embodiment, further comprises, associated to each TV set 19, an extension device in transmission (extension device) 15 arranged, as it will be disclosed later on in detail, to receive selection commands from the controller 14 and to transmit such commands to the distribution set 11 in a first mode; in the preferred embodiment, the extension device 15 is connectable to a transmitter device 51 that, as it will be disclosed later on in detail, is arranged to transmit, when connected to the extension device 15, the selection commands to the distribution set 11 in a second mode.
Obviously, in other embodiments the transmitter device can be comprised into the extension device and arranged to transmit, controlled by a suitable switch, in the second mode.

The modulator 12, according to the present exemplary embodiment, in addition to comprise a modulator circuit of known type, comprises or is connected to an extension device in reception (reception device) 18, for instance through a port of USB (Universal Serial Bus) type 12a.

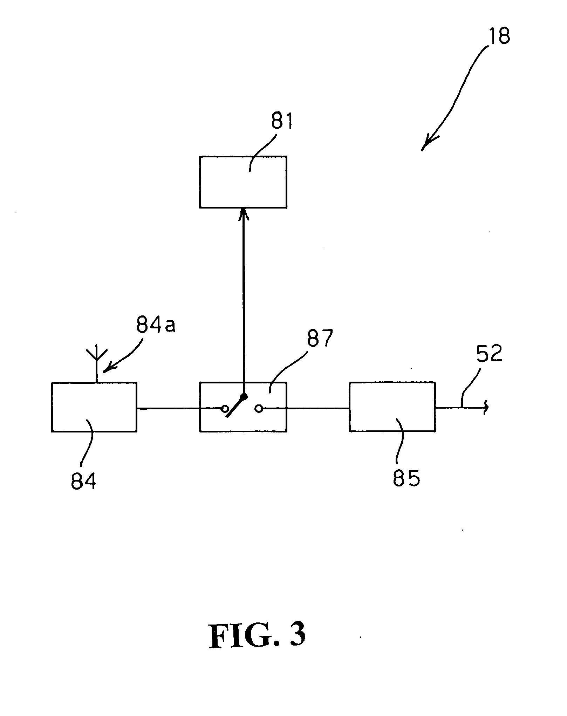

In particular, the reception device 18, in the preferred embodiment, comprises a first receiving component 84 (Fig. 2, Fig. 3), of known type, connected to an antenna 84a, of known type too, and arranged to receive from the extension device 15 the selection commands in the first mode, for instance commands in the form of RF signals in a frequency band of approximately 400 MHz, and to convert them into an IR band. The reception device 18, in the preferred embodiment, also comprises a second receiving component 85, of known type, connected, through the modulator 12, to the coaxial cable 52 for connection to the splitter 57, and arranged to receive from the extension device 15 the selection commands in the second mode, for instance commands in the form of signals for TV cable in a frequency band of approximately 10.7 MHZ, and to convert them into an IR band, and an IR transmitting component (IR transmitter) 81, of known type, arranged to transmit IR signals to the distribution set 11.
Finally, the reception device (RX/IR box) 18 comprises, in the preferred embodiment, a switch component 87, for instance a manual switch of known type, arranged to connect the IR transmitter 81, alternatively, either to the first receiving component (RF receiver) 84 or to the second receiving component (CBL receiver) 85 for transmitting the selection commands in IR band to the distribution set 11 through the IR transmitter 81. Preferably, the IR transmitter 81 is arranged to be located near the distribution set by means of a connection cable.

The reception device or RX/IR box 18, according to present exemplary embodiment, is therefore arranged to receive selection commands in at least two modes and to convert the commands in a frequency band, preferably directly usable, arranged for commanding the distribution set 11.

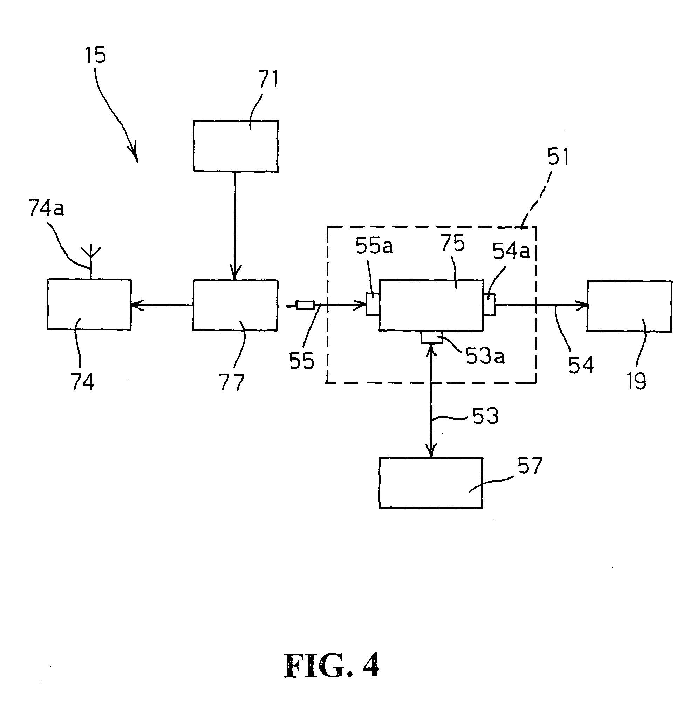

The extension device 15 comprises a IR receiving component (IR receiver) 71 (Fig. 2, Fig. 4), of known type, arranged to receive selection commands from the controller 14, and a transmitting component 74, of known type, connected to an antenna 74a, of known type too, and arranged to convert and to transmit to the RX/IR box 18 the selection commands in the first mode, for instance commands in the form of RF signals in a frequency band of approximately 400 MHz.
The extension device (box IR/TX) 15, in the preferred embodiment, further comprises a connector 77, of known type, for instance of jack type (jack or jack plug), arranged to allow to connect, through a cable 55, for instance of telephone type, the transmitter device (TXCBL box) 51 to the box IR/TX 15. Preferably, the connector 77 is configured so that, if the cable (telephone cable) 55 is not connected to or inserted into the connector 77, the IR receiver 71 remains connected to the transmitting component (RF transmitter) 74 so as to maintain the first transmission mode of selection commands in operation. If the telephone cable 55 is connected to the connector 77, said connector is arranged to interrupt, in a known way, the connection between the IR receiver 71 and the RF transmitter 74 and to connect the TXCBL box 51 to the IR receiver 71.
Obviously, as easily comprehensible to a technician in the field, in other embodiments the connector 77 can comprise or can be also associated to manual or electronic switches for connecting, alternatively, the IR receiver 71 either to the RF transmitter 74 or to the TXCBL box 51.
The TXCBL box 51, in the preferred embodiment, comprises a transmitting component 75, for instance a component arranged to convert selection commands from IR band to TV cable band and to transmit the commands to the distribution set; in particular the transmitting component 75 is arranged to convert selection commands from the IR band into a frequency band of approximately 10.7 MHZ, and it comprises a first connector 55a, of known type, arranged to be connected to the telephone cable 55, a second connector 53a for connecting the TXCBL box 15 to the splitter 57 through a cable 53, for instance a TV cable, and a third connector 54a, for connecting the TXCBL box 15 to the TV set 19, through a cable 54, for instance a TV cable. In the described configuration the transmitter device or TXCBL box 51 is arranged to transparently transfer TV signals coming from the distribution set 11 to the TV set for reproduction and to transmit, if connected to the extension device 15, selection commands to the RX/IR box 18, through cables 53 and 52, for re-conversion and transmission to the distribution set 11.

In summary, the extension device 15, associated to or removably connected to the transmitter device 51 is arranged to receive selection commands and to transmit them in at least two selectively actuatable modes to a reception device 18, preferably a remote device, arranged to reconvert the received selection commands into signals directly usable by the distribution set and to control the selection of channels or programs.

The operation of the system as described above is as follows.

Following a selection command sent by a controller 14 (Fig. 2, Fig. 3, Fig. 4) to the extension device 15, in case the transmitter device 51 is kept disconnected from the extension device 15 and the switch 87 is switched so as to connect the RF receiver 84 to the IR transmitter 81, the selection command is converted into RF (radio frequency) signals and transmitted to the reception device 18 that converts the signals from RF to IR and transmits them to the distribution set 11 for changing, for instance, the selection of a channel and for transmitting TV signals from the distribution set to the TV sets 19, through the SCART cable and socket and cables 52, 53, 54.

If the RF signals are not received by the reception device 18 and are interfered by noise or in other situations, the switch 87 is switched so as to connect the CBL receiver 85 to the IR transmitter 81 and the telephone cable 55 is connected to the extension device 15. In such a configuration, if a controller 14 transmits selection commands to the extension device 15, such signals are sent to the transmitter device 51 that converts them into signals in TV cable band and transmits them, through cables 53 and 52 to the reception device 18 so as to control, in a way similar to that already described, the distribution set 11 to select a channel and to transmit TV signals to the TV sets 19, through SCART cable and socket and cables 52, 53, 54.

The preferred embodiment provides for a modulator device 12 that is distinguished from the distribution set 11.

In further embodiments it is provided that the distribution set comprises the modulator device and that the reception device, configured in a way equivalent to that described, is directly connected thereto or indirectly, for instance by means of accessories of known type arranged to electrically power the reception device and to make the selection commands, transmitted through cables TV, reach the reception device.

Such embodiments, obviously, as easily comprehensible to a technician in the field, do not modify the features of the invention as described and claimed.

Thanks to the described configurations, it is therefore possible to remotely select channels in more than one mode without modifying the location or configuration of the extension devices or of the reception devices.

Obvious changes and/or variations to the above disclosure are possible, as regards dimensions, shapes, components, circuit elements, connections and contacts, as well as details of circuitry, of the described construction and operation method without departing from the scope of the invention as defined by the claims that follow.

## Claims

1. System for selecting channels or programs comprising
- centralised distribution means (11) arranged to distribute channels or programs to at least one reproduction apparatus (19) ;
- selection means (14) arranged to select and to transmit to said centralised distribution means (11) selection commands for selecting channels or programs to be reproduced on said at least one reproduction apparatus (19);
**characterised by**
- conversion means (15, 51, 81) interposed between said selection means (14) and said centralised distribution means (11) and arranged to convert and to transmit said selection commands to said centralised distribution means (11) in at least two selectively actuatable alternative modes.

2. System according to claim 1, **characterised in that** said conversion means (15, 51, 81) comprises
- first conversion means (74) arranged to convert and to transmit said selection commands in a first frequency band; and
- second conversion means (75) arranged to convert and to transmit said selection commands in a second frequency band.

3. System according to any one of claims 1 to 2, **characterised in that** said conversion means (15, 51, 81) further comprises re-conversion means (18) arranged to receive and to reconvert said selection commands from one of the two selectively actuatable alternative modes into one mode directly usable by said centralised distribution means.

4. System according to any one of claims 1 to 3, **characterised in that** said conversion means (15, 51, 81) comprises
- an extension device (15) having
- a receiving component (71) arranged to receive said selection commands from said selection means (14);
- a first transmitting component (74) selectively connectable to said receiving component and arranged to convert and to transmit said selection commands in said first mode;
- a second transmitting component (75) selectively connectable to said receiving component (71) and arranged to convert and to transmit said selection commands in said second mode; and
- a reception device (18) having
- a first receiving component (84) arranged to receive and to reconvert said selection commands from said first mode in a mode directly usable by said centralised distribution means;
- a second receiving component (85) arranged to receive and to reconvert said selection commands from said second mode in a mode directly usable by said centralised distribution means;
- a further transmitter (81) selectively connectable either to said first receiving component (84) or to said second receiving component (85) and arranged to transmit said selection commands to said centralised distribution means.

5. System according to any one of claims 1 to 4 **characterised in that** said first mode comprises commands in the form of RF signals and said second mode comprises commands in the form of signals for TV cable.

6. Device for converting and transmitting to centralised distribution means (11) selection commands for selecting channels or programs to be reproduced on at least one reproduction apparatus (19) comprising
- first conversion means (74) arranged to convert and to transmit said selection commands in a first mode;
**characterised by**
- second conversion means (75) actuatable alternatively to said first conversion means (74) and arranged to convert and to transmit said selection commands in a second mode.

7. Device according to claim 6 **characterised in that** said first mode comprises commands in the form of RF signals and said second mode comprises commands in the form of signals for TV cable.

8. Device for receiving, converting and transmitting selection commands to centralised distribution means (11) for selecting channels or programs to be reproduced on at least one reproduction apparatus (19),
comprising
- first reception means (84) arranged to receive said selection commands in a first mode and to convert them in a mode directly usable by said centralised distribution means (11);
**characterised by**
- second reception means (85) actuatable alternatively to said first reception means (84) and arranged to receive said selection commands in a second mode and to convert them in a mode directly usable by said centralised distribution means (11).

9. Device according to claim 8 **characterised by**
- a switch component (87) arranged to alternatively switch between the actuation of said first reception means (84) and the actuation of said second reception means (85).

10. Device according to any one of claims 8 to 9 **characterised in that** said first mode comprises commands in the form of RF signals and said second mode comprises commands in the form of signals for TV cable.

11. Method for selecting, through selection means (14), channels or programs on centralised distribution means (11) arranged to distribute channels or programs to at least one reproduction apparatus (19), **characterised by** the steps of
- sending selection commands;
- converting and transmitting said selection commands to said centralised distribution means (11) in at least two alternative modes selectively actuatable .

12. Method according to claim 11 **characterised by** the further step of
- reconverting said selection commands from one of the two alternative modes selectively actuatable to one mode directly usable by said centralised distribution means.
